# EUROPEAN PATENT APPLICATION

(11) **EP 4 477 681 A1**
(43) Date of publication of application: **18.12.2024**
(21) Application number: 24741652.2
(22) Date of filing: 08.01.2024
(51) Int. Cl.: C08F 212/08, C08F 210/00, C08F 2/38, C08F 4/642

(54) **BLOCK COPOLYMER, BLOCK COPOLYMER PREPARATION METHOD AND RESIN COMPOSITION**

(30) Priority: 11.01.2023 KR 20230004093
(71) Applicant: LG Chem, Ltd., Yeongdeungpo-gu Seoul 07336 (KR)
(72) Inventor: CHO, Sol, Daejeon 34122 (KR); PARK, Ji Hyun, Daejeon 34122 (KR); SA, Seok Pil, Daejeon 34122 (KR); IM, Seul Ki, Daejeon 34122 (KR); LEE, Hyun Mo, Daejeon 34122 (KR); KIM, Yun Kon, Daejeon 34122 (KR); SHIN, Eun Ji, Daejeon 34122 (KR); MIN, Se Hye, Daejeon 34122 (KR); LIM, Hyun Suk, Daejeon 34122 (KR)
(74) Representative: Hoffmann Eitle
(86) International application number: PCT/KR2024/000357
(87) International publication number: WO 2024/151031

(57) **Abstract**

The present invention relates to a block copolymer, and to a block copolymer, a preparation method therefor and a polyolefin-based resin composition comprising same, the block copolymer enabling all of low-temperature sealing strength, sealing initiation temperature, and low-temperature impact strength of the polyolefin-based resin composition to be improved.

## Description

### TECHNICAL FIELD

### [Cross-reference to Related Application]

The present application claims the benefit of priority based on Korean Patent Application No. 10-2023-0004093, filed on January 11, 2023, the entire contents of which are incorporated herein by reference.

### [Technical Field]

The present invention relates to a block copolymer, a method for preparing same, and a resin composition comprising same.

### BACKGROUND ART

Polypropylene is widely used as a medical material due to excellent rigidity and molding processability. However, polypropylene has the problem of weak impact strength, and in order to compensate for this, methods using a styrene-based thermoplastic elastomer, that is, an elastomer called a styrene-ethylene-butylene-styrene (SEES) block copolymer in a propylene-based resin composition are being proposed.

The wettability of a polypropylene-based resin composition containing such a styrene-based thermoplastic elastomer is improved as the molecular weight distribution of the styrene-based thermoplastic elastomer increases, and as the wettability increases, low temperature heat seal strength and a seal initiation temperature (SIT) are excellent, and product productivity can be improved if the low temperature heat seal strength and the seal initiation temperature are excellent. However, there is a problem that the wider the molecular weight distribution of the styrene-based thermoplastic elastomer, the lower the low temperature impact strength of the polypropylene-based resin composition containing the same.

Therefore, in order to apply a polypropylene-based resin composition as a medical material, it is necessary to simultaneously improve low temperature heat seal strength and seal initiation temperature as well as low temperature impact strength.

### [Prior Art Document]

### [Patent Document]

(Patent Document 1) KR 10-1657925 E1

### DISCLOSURE OF THE INVENTION

### TECHNICAL PROBLEM

The present invention is derived to solve the defects of the prior art and has an object of providing a block copolymer capable of improving all the low temperature heat seal strength, the seal initiation temperature and the low temperature impact strength of a polyolefin-based resin composition.

In addition, the present invention has an object of providing a preparation method for preparing the block copolymer.

In addition, the present invention has an object of providing a polyolefin-based resin composition including the block copolymer.

### TECHNICAL SOLUTION

In order to solve the above-described tasks, the present invention provides a block copolymer and a resin composition.
(1) The present invention provides a block copolymer comprising: an aromatic vinyl-based polymer block; and an olefin-based polymer block, wherein a weight average molecular weight (Mw) is 110,000 g/mol to 200,000 g/mol, and molecular weight distribution (Mw/Mn) is 2.4 to 2.9.
(2) The present invention provides the block copolymer according to (1), wherein the olefin-based polymer block comprises an ethylene monomer unit and an alpha olefin-based monomer unit.
(3) The present invention provides the block copolymer according to (1) or (2), wherein the olefin-based polymer block comprises an ethylene monomer unit and an alpha olefin-based monomer unit of 3 to 20 carbon atoms.
(4) The present invention provides the block copolymer according to (2) or (3), wherein the alpha olefin-based monomer is one or more selected from the group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene.
(5) The present invention provides the block copolymer according to any one of (1) to (4), wherein the block copolymer comprises: 10 wt% to 20 wt% of the aromatic vinyl-based polymer block; and 80 wt% to 90 wt% of the olefin-based polymer block.
(6) The present invention provides the block copolymer according to any one of (1) to (5), wherein the block copolymer comprises 45 wt% to 55 wt% of an alpha olefin-based monomer unit of 3 to 20 carbon atoms.
(7) The present invention provides the block copolymer according to any one of (1) to (6), wherein the block copolymer comprises 25 wt% to 45 wt% of an ethylene monomer unit.
(8) The present invention provides the block copolymer according to any one of (1) to (7), wherein the block copolymer does not comprise an unsaturated double bond.
(9) The present invention provides a method for preparing a block copolymer, comprising: a step of polymerizing one or more olefin-based monomers using a catalyst composition comprising a transition metal catalyst, an aluminoxane-based compound and a trialkylaluminum in the presence of a chain transfer agent to prepare an olefin-based polymer block intermediate (S10); and a step of injecting and polymerizing a polymerization initiator and an aromatic vinyl-based monomer in the presence of the olefin-based polymer block intermediate prepared in step (S10) to prepare a block copolymer (S20).
(10) The present invention provides the method for preparing a block copolymer according to (9), wherein the trialkylaluminum is trioctylaluminum.
(11) The present invention provides the method for preparing a block copolymer according to (9) or (10), wherein the catalyst composition comprises the aluminoxane-based compound and trialkylaluminum in a molar ratio of 1:0.01 to 10.0.
(12) The present invention provides a resin composition comprising a polyolefin-based resin and the block copolymer according to any one of (1) to (8).
(13) The present invention provides the resin composition according to (12), wherein the resin composition comprises 40 wt% to 80 wt% of the polyolefin-based resin and 20 wt% to 60 wt% of the block copolymer.
(14) The present invention provides the resin composition according to (12) or (13), wherein the resin composition has an impact strength at -50°C measured by ADTM D256 of 5.0 kgf·m/m or more.
(15) The present invention provides the resin composition according to any one of (12) to (14), wherein the resin composition has a heat seal strength at 90°C of 0.80 N or more, measured according to the conditions below using a film having a thickness of 80 um and a width of 25.4 mm by J&B Universal Sealing Machine Type 5000MB.
   - Sealing pressure: 0.1 N/mm²
   - Sealing time: 0.1 seconds
   - Cooling time: 99 seconds
   - Peeling speed: 10 mm/sec
   - Initiation temperature: 80°C
   - End temperature: 150°C
   - Temperature increase: 10°C
(16) The present invention provides the resin composition according to any one of (12) to (15), wherein the resin composition has a heat seal strength at 100°C of 4.50 N or more, measured according to the conditions below using a film having a thickness of 80 um and a width of 25.4 mm by J&B Universal Sealing Machine Type 5000MB.
   - Sealing pressure: 0.1 N/mm²
   - Sealing time: 0.1 seconds
   - Cooling time: 99 seconds
   - Peeling speed: 10 mm/sec
   - Initiation temperature: 80°C
   - End temperature: 150°C
   - Temperature increase: 10°C
(17) The present invention provides the resin composition according to any one of (12) to (16), wherein the resin composition has a seal initiation temperature at a point where a heat seal strength reached 3 N of 96.0°C or less, calculated by a linear interpolation method from heat seal strengths at 90°C and 100°C, measured according to the conditions below using a film having a thickness of 80 um and a width of 25.4 mm by J&B Universal Sealing Machine Type 5000MB.
   - Sealing pressure: 0.1 N/mm²
   - Sealing time: 0.1 seconds
   - Cooling time: 99 seconds
   - Peeling speed: 10 mm/sec
   - Initiation temperature: 80°C
   - End temperature: 150°C
   - Temperature increase: 10°C

### ADVANTAGEOUS EFFECTS

The polyolefin-based resin composition including the block copolymer of the present invention has excellent low temperature heat seal strength, seal initiation temperature and low impact strength. Accordingly, the polyolefin-based resin composition is particularly suitable as a medical material.

In addition, according to the method for preparing a block copolymer of the present invention, a block copolymer having broad molecular weight distribution may be prepared according to the purpose of the present invention.

### BEST MODE FOR CARRYING OUT THE INVENTION

Hereinafter, the present invention will be described in more detail to assist the understanding of the present invention.

Words or terms used in the description and claims of the present invention shall not be interpreted as the meaning defined in commonly used dictionaries. The words or terms should be interpreted as having a meaning that is consistent with their meaning in the technical idea of the invention, based on the principle that an inventor may properly define the meaning of the words to best explain the invention.

In the present invention, the term "monomer unit" may mean a component or a structure derived from a monomer, or the material itself, particularly, a repeating unit formed in a polymer through the participation of the monomer injected during polymerizing the polymer in a polymerization reaction.

In the present description, the term "composition" includes a mixture of materials including the corresponding composition as well as reaction products and decomposition products formed from the material of the corresponding composition.

The present invention provides a block copolymer.

According to an embodiment of the present invention, the block copolymer includes: an aromatic vinyl-based polymer block; and an olefin-based polymer block, wherein a weight average molecular weight (Mw) is 110,000 g/mol to 200,000 g/mol and molecular weight distribution (Mw/Mn) is 2.4 to 2.9.

According to an embodiment of the present invention, the block copolymer including the aromatic vinyl-based polymer block and the olefin-based polymer block is a multiblock copolymer, and may be prepared in the presence of a novel additive as described in a method for preparing a block copolymer explained below.

According to an embodiment of the present invention, the weight average molecular weight of the block copolymer may be 110,000 g/mol to 200,000 g/mol, particularly, 110,000 g/mol or more, 115,000 g/mol or more, 120,000 g/mol or more, or 125,000 g/mol or more, and 200,000 g/mol or less, 199,000 g/mol or less, 198,000 g/mol or less, 197,000 g/mol or less, 196,000 g/mol or less, 195,000 g/mol or less, 194,000 g/mol or less, 193,000 g/mol or less, 192,000 g/mol or less, or 191,000 g/mol or less.

According to an embodiment of the present invention, the molecular weight distribution (Mw/Mn, PDI) of the block copolymer may be 2.4 to 2.9, particularly, 2.40 or more, 2.41 or more, 2.42 or more, 2.43 or more or 2.44 or more, and 2.90 or less, 2.89 or less, 2.88 or less or 2.87 or less. Here, the molecular weight distribution is calculated from the ratio of "weight average molecular weight/number average molecular weight", and the weight average molecular weight and the number average molecular weight is a polystyrene conversion molecular weight analyzed by gel permeation chromatography (GPC).

According to an embodiment of the present invention, the weight average molecular weight and the molecular weight distribution of the block copolymer are for simultaneously improving the low temperature heat seal strength, the seal initiation temperature and the low temperature impact strength of a resin composition including the block copolymer, and by controlling the weight average molecular weight in the range, while securing very broad molecular weight distribution, the low temperature heat seal strength and the seal initiation temperature of the resin composition may be improved together with the low temperature impact strength at the same time. If the molecular weight distribution of the block copolymer is greater than the upper limit of the range, it means that a polymerization reaction using a chain transfer agent as a medium is not performed properly during preparing the block copolymer. That is, it means that the structure of the block copolymer to be prepared is not formed properly into a desired type, and accordingly, there is a problem in deteriorating the impact strength of the resin composition including the block copolymer.

According to an embodiment of the present invention, the block copolymer may be an olefin-based polymer block including a branch derived from a main chain.

According to an embodiment of the present invention, the aromatic vinyl-based polymer block may be a block formed by the polymerization of an aromatic vinyl-based monomer, and the aromatic vinyl-based monomer for forming the aromatic vinyl-based polymer block may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, the aromatic vinyl-based polymer block content may be 10 wt% to 20 wt%, particularly, 10.0 wt% or more, 10.5 wt% or more, 11.0 wt% or more, 11.5 wt% or more, 12.0 wt% or more, 12.5 wt% or more, or 12.7 wt% or more, and 20.0 wt% or less, 19.5 wt% or less, 19.0 wt% or less, or 18.8 wt% or less on the basis of the total block copolymer content. Within this range, excellent effect of the mechanical properties and processability of the block copolymer may be obtained.

According to an embodiment of the present invention, the olefin-based polymer block may include an ethylene monomer unit and an alpha olefin-based monomer unit. In a particular embodiment, the olefin-based polymer block (that is, poly(ethylene-co-olefin)) may include an ethylene monomer unit and an alpha olefin-based monomer unit of 3 to 20 carbon atoms, particularly, an ethylene monomer unit and an alpha olefin-based monomer unit of 6 to 8 carbon atoms. Like this, if the olefin-based polymer block includes the ethylene monomer unit and the alpha olefin-based monomer unit of 3 to 20 carbon atoms, or 6 to 8 carbon atoms, weather resistance, heat resistance, abrasion resistance, impact resistance, adhesiveness, transparency and recyclability are excellent, and effect of improving the mechanical properties of a resin composition including the block copolymer may be obtained. Meanwhile, the ethylene monomer unit and the alpha olefin-based monomer unit of the olefin-based polymer block may be present in a random copolymer type in the olefin-based polymer block.

According to an embodiment of the present invention, an alpha olefin-based monomer constituting the alpha olefin-based monomer unit may be one or more selected from the group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene.

According to an embodiment of the present invention, the olefin-based polymer block content may be 80 wt% to 90 wt%, particularly, 80.0 wt% or more, 80.5 wt% or more, 81.0 wt% or more, or 81.2 wt% or more, and 90.0 wt% or less, 89.5 wt% or less, 88.0 wt% or less, 87.5 wt% or less, or 87.3 wt% or less on the basis of the total block copolymer content, and within this range, excellent effect of the mechanical properties and processability of the block copolymer may be obtained.

According to an embodiment of the present invention, the content of the alpha olefin-based monomer of 3 to 20 carbon atoms may be 45 wt% to 55 wt% on the basis of the total block copolymer content. In a particular embodiment, the content of the alpha olefin-based monomer of 3 to 20 carbon atoms may be 45.0 wt% or more, 45.5 wt% or more, 46.0 wt% or more, 46.5 wt% or more, 47.0 wt% or more, 47.5 wt% or more, 48.0 wt% or more, 48.5 wt% or more, 49.0 wt% or more, or 49.2 wt% or more, and 55.0 wt% or less, 54.5 wt% or less, 54.0 wt% or less, or 53.5 wt% or less on the basis of the total block copolymer content, and within this range, excellent effect of the mechanical properties and processability of the block copolymer may be obtained.

According to an embodiment of the present invention, if the olefin-based polymer block includes the ethylene monomer unit, the ethylene monomer unit content on the basis of the total block copolymer content may be the residual content excluding the content of the aromatic vinyl-based polymer block and the content of the alpha olefin-based monomer unit of 3 to 20 carbon atoms. In a particular embodiment, if the olefin-based polymer block includes the ethylene monomer unit, the block copolymer may include the ethylene monomer unit in 25 wt% to 45 wt%, more particularly, 25.0 wt% or more, 26.0 wt% or more, 27.0 wt% or more, 28.0 wt% or more, 29.0 wt% or more, or 29.5 wt% or more, and 45.0 wt% or less, 44.0 wt% or less, 43.0 wt% or less, 42.0 wt% or less, 41.0 wt% or less, 40.0 wt% or less, 39.0 wt% or less, 38.5 wt% or less, and within this range, excellent effect of the mechanical properties and processability of the block copolymer may be obtained.

According to an embodiment of the present invention, the block copolymer may be prepared by a method for preparing a block copolymer explained hereinbelow, and a hydrogenation reaction is not required as a styrene-ethylene-butylene-styrene (SEES) block copolymer prepared by the hydrogenation reaction of a styrene-butadiene-styrene block copolymer, and accordingly, the block copolymer is clearly distinguished from the styrene-ethylene-butylene-styrene (SEES) block copolymer prepared by the hydrogenation reaction of the styrene-butadiene-styrene block copolymer, and has excellent polymer stability.

The present invention provides a method for preparing a block copolymer. The method for preparing a block copolymer may be a method for preparing the above-described block copolymer.

According to an embodiment of the present invention, the method for preparing a block copolymer may include: a step of polymerizing one or more olefin-based monomers using a catalyst composition comprising a transition metal catalyst, an aluminoxane-based compound and trialkylaluminum in the presence of a chain transfer agent to prepare an olefin-based polymer block intermediate (S10); and a step of injecting and polymerizing a polymerization initiator and an aromatic vinyl-based monomer in the presence of the olefin-based polymer block intermediate prepared in step (S10) to prepare a block copolymer (S20).

According to an embodiment of the present invention, step (S10) is a step of polymerizing one or more olefin-based monomers using a transition metal catalyst in the presence of a chain transfer agent to prepare an olefin-based polymer block intermediate.

According to an embodiment of the present invention, the transition metal catalyst is a catalyst for growing olefin-based polymer through coordination chain transfer polymerization, and may be a catalyst composition including a transition metal catalyst as a main catalyst, a co-catalyst and trialkylaluminum.

According to an embodiment of the present invention, the transition metal catalyst may be a transition metal compound represented by Formula 1 below.

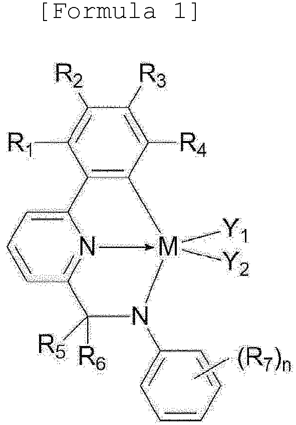

In Formula 1, M is Ti, Zr or Hf, R₁ to R₄ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected to form a ring, R₅ and R₆ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is conducted by substitution with an alkyl group of 1 to 12 carbon atoms, each R₇ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms, n is 1 to 5, and Y₁ and Y₂ are each independently a halogen group; an alkyl group of 1 to 20 carbon atoms; an alkenyl group of 2 to 20 carbon atoms; an alkynyl group of 2 to 20 carbon atoms; a cycloalkyl group of 3 to 20 carbon atoms; an aryl group of 6 to 20 carbon atoms; an alkylaryl group of 7 to 20 carbon atoms; an arylalkyl group of 7 to 20 carbon atoms; a heteroaryl group of 5 to 20 carbon atoms; an alkoxy group of 1 to 20 carbon atoms; a substituted or unsubstituted aryloxy group of 5 to 20 carbon atoms; an alkylamino group of 1 to 20 carbon atoms; an arylamino group of 5 to 20 carbon atoms; an alkylthio group of 1 to 20 carbon atoms; an arylthio group of 5 to 20 carbon atoms; an alkylsilyl group of 1 to 20 carbon atoms; an arylsilyl group of 5 to 20 carbon atoms; a hydroxyl group; an amino group; a thio group; a silyl group; a cyano group; or a nitro group.

According to an embodiment of the present invention, in Formula 1, M may be Hf, R₁ to R₄ may be each independently hydrogen; or a substituted or unsubstituted alkyl group of 1 to 20 carbon atoms, where adjacent two or more among them may be connected to form a ring. Otherwise, R₁ and R₂ may be each independently an alkyl group of 1 to 20 carbon atoms and may be connected with each other to form an aromatic ring of 5 to 20 carbon atoms, and R₃ and R₄ may be hydrogen.

According to an embodiment of the present invention, in Formula 1, R₅ and R₆ are each independently hydrogen; or a substituted or unsubstituted aryl group of 6 to 20 carbon atoms, where the substitution is substitution with an alkyl group of 1 to 6 carbon atoms.

According to an embodiment of the present invention, in Formula 1, each R₇ may be independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms.

According to an embodiment of the present invention, in Formula 1, n may be 1 to 3, preferably, 2, and Y₁ and Y₂ may be each independently an alkyl group of 1 to 20 carbon atoms.

According to an embodiment of the present invention, the transition metal compound represented by Formula 1 may be a compound represented by Formula 1a below.

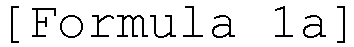

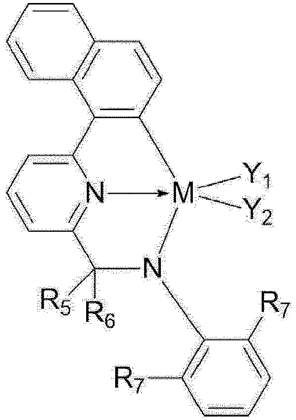

In Formula 1a, M, R₅ to R₇, Y₁ and Y₂ are the same as defined above.

According to an embodiment of the present invention, the transition metal compound represented by Formula 1 may be selected from the compounds below, but is not limited thereto, and all transition metal compounds corresponding to Formula 1 are included in the present invention.

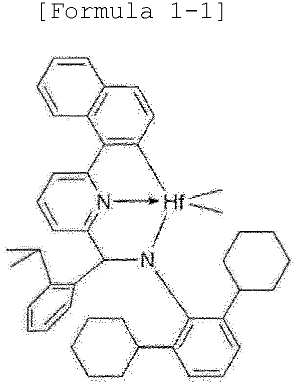

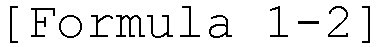

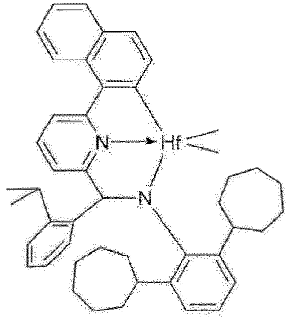

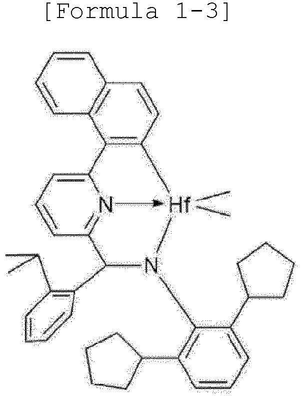

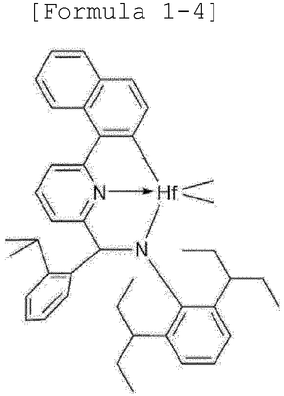

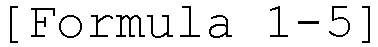

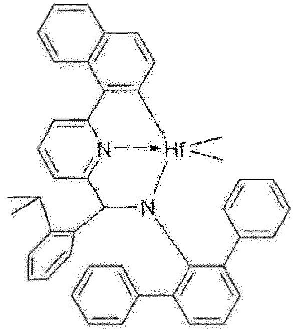

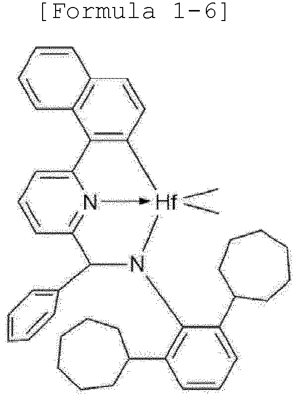

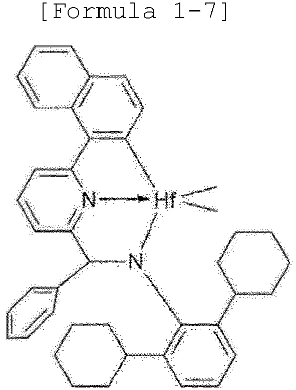

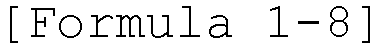

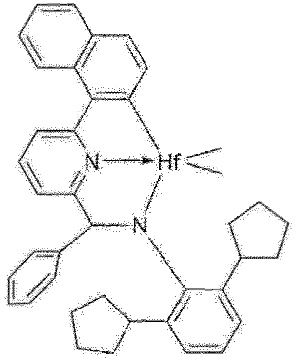

According to an embodiment of the present invention, the transition metal compound represented by Formula 1 may be prepared using a ligand compound represented by Formula 2 below.

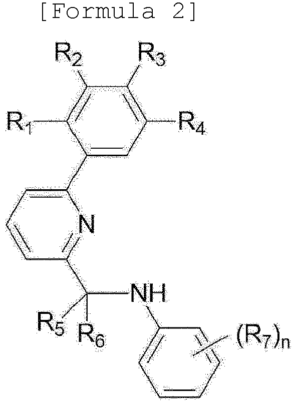

In Formula 2, R₁ to R₄ are each independently a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected with each other to form a ring, R₅ and R₆ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is substitution with an alkyl group of 1 to 12 carbon atoms, each R₇ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms, and n is 1 to 5.

According to an embodiment of the present invention, the transition metal compound represented by Formula 1 may be prepared by including a step of reacting a ligand compound represented by Formula 2 and a compound represented by Formula 3 below.

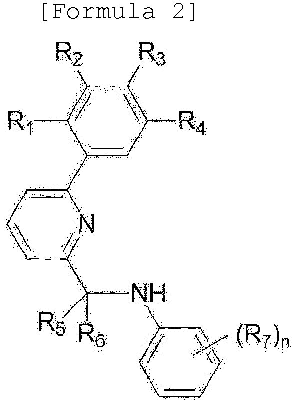

[Formula 3] M(Y₁Y₂)₂

In the above formulae,
R₁ to R₇, M, Y₁ and Y₂ are the same as defined above.

According to an embodiment of the present invention, during preparing the transition metal compound represented by Formula 1, the reaction may be performed by the processes below.

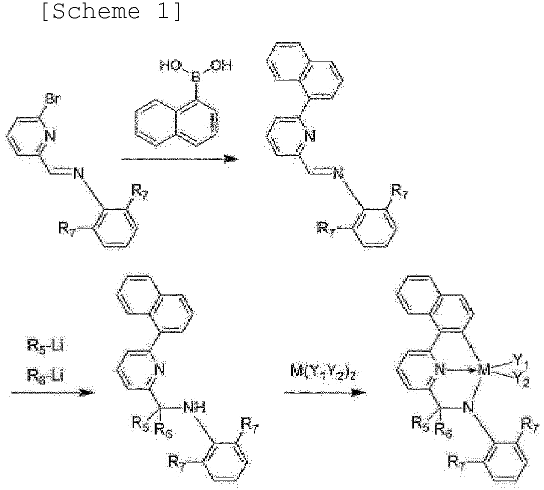

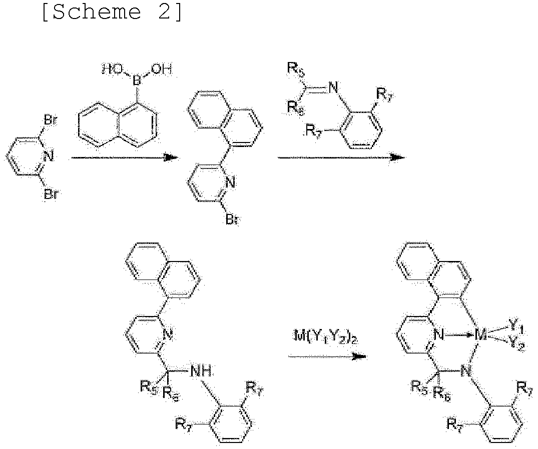

According to an embodiment of the present invention, an organozinc compound is used as a chain transfer agent and is a material inducing the preparation of a copolymer by performing chain transfer during the preparation in a polymerization reaction, and the chain transfer agent may be a chain transfer agent for preparing a block copolymer by coordination chain transfer polymerization.

According to an embodiment of the present invention, the chain transfer agent may include an organozinc compound represented by Formula 5 below, and particularly, the chain transfer agent may include the organozinc compound represented by Formula 5 in 96 mol% or more, preferably, not include by-products other than the organozinc compound represented by Formula 5.

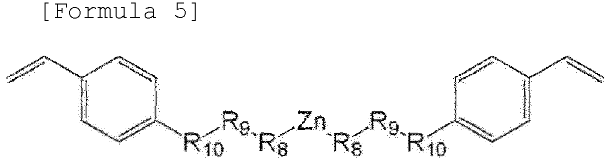

In Formula 5, R₈ and R₁₀ are each independently a single bond or an alkylene group of 1 to 10 carbon atoms, R₉ is an alkylene group of 1 to 10 carbon atoms or -SiR₁₁R₁₂-, and R₁₁ and R₁₂ are each independently an alkyl group of 1 to 10 carbon atoms.

According to an embodiment of the present invention, in Formula 5, R₈ and R₁₀ may be each independently a single bond or an alkylene group of 1 carbon atom, R₉ may be an alkylene group of 1 carbon atom or -SiR₁₁R₁₂-, and R₁₁ and R₁₂ may be each independently an alkyl group of 1 carbon atom.

According to an embodiment of the present invention, the organozinc compound represented by Formula 5 may be one selected from the group consisting of organozinc compounds represented by Formula 5-1 to Formula 5-4, preferably, any one among Formula 5-3 and Formula 5-4 below.

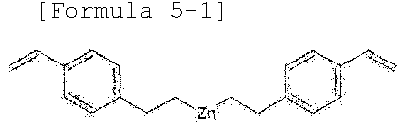

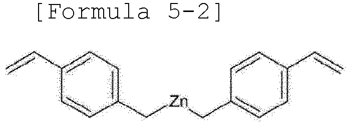

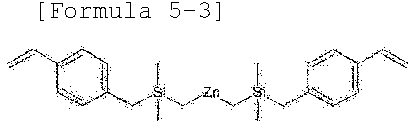

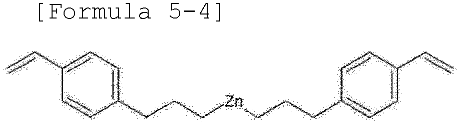

According to an embodiment of the present invention, the chain transfer agent may preferably include the organozinc compound of Formula 5 in 97 mol% or more, preferably, 98 mol% or more, or 99 mol% or more. Most preferably, by-products other than the organozinc compound may be not included. This means that impurities including chlorine or magnesium are not included either as well as the by-products such as a dimer other than the organozinc compound represented by Formula 5. That is, the chain transfer agent may include only the organozinc compound represented by Formula 5.

According to an embodiment of the present invention, if one or more olefin-based monomers, particularly, ethylene and an alpha olefin-based monomer are reacted using the organozinc compound of Formula 5 as a chain transfer agent in the presence of a catalyst composition including a transition metal compound, polymerization may be performed with the insertion of the ethylene and the alpha olefin-based monomer between zinc (Zn) and R₁₀ of the organozinc compound.

According to an embodiment of the present invention, if the compound of Formula 5 is used as the organozinc compound for the reaction of ethylene and an alpha olefin-based monomer to prepare an olefin-based polymer block, an olefin-based polymer block intermediate may be prepared, and the olefin-based polymer block intermediate may be represented by Formula 6.

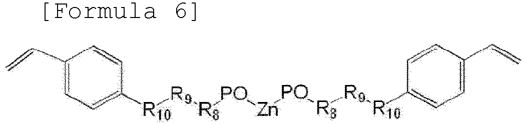

In Formula 6, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ may be each independently an alkyl group of 1 to 10 carbon atoms, and PO may be an olefin-based polymer block.

According to an embodiment of the present invention, the organozinc compound may be prepared by a preparation method including: a step of preparing a Grignard reagent containing a styrene residual group; and a step of reacting the Grignard reagent thus prepared with a zinc compound to prepare the organozinc compound represented by Formula 5, and the zinc compound may be alkylzinc alkoxide.

According to an embodiment of the present invention, the organozinc compound represented by Formula 5 prepared by the preparation method of the organozinc compound is synthesized as a single compound, does not include by-products such as a dimer, and further, does not include impurities including chlorine, for example organozinc chloride (R-Zn-Cl) that may act as a catalyst poison. In addition, if the organozinc compound represented by Formula 5 is prepared according to the preparation method of the organozinc compound, a single compound is synthesized, and effects of excellent synthesis reproduction may be achieved. Meanwhile, in preparing the organozinc compound, as in the present invention, in order to exclude by-products and impurities, it may be important to select the Grignard reagent containing a styrene residual group and the zinc compound.

According to an embodiment of the present invention, the Grignard reagent containing a styrene residual group may be represented by Formula 7 below.

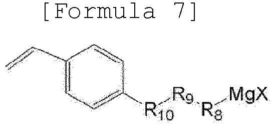

In Formula 7, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ may be each independently an alkyl group of 1 to 10 carbon atoms, and X may be a halogen group.

In addition, according to an embodiment of the present invention, in Formula 7, R₈ and R₁₀ may be each independently a single bond or an alkylene group of 1 carbon atom, R₉ may be an alkylene group of 1 carbon atom or -SiR₁₁R₁₂-, and R₁₁ and R₁₂ may be each independently an alkyl group of 1 carbon atom.

According to an embodiment of the present invention, the Grignard reagent containing a styrene residual group, represented by Formula 7 may be one selected from the group consisting of Grignard reagents containing a styrene residual group, represented by Formulas 7-1 to 7-4 below.

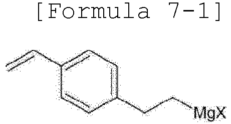

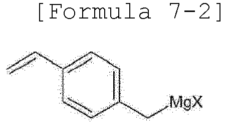

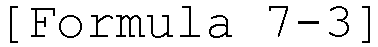

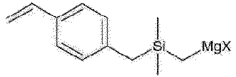

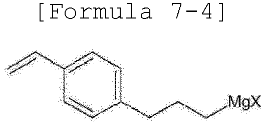

According to an embodiment of the present invention, the Grignard reagent containing a styrene residual group, represented by Formula 7 may be prepared through the reaction of a halide compound in which a halide (-X) is substituted at R₈ with magnesium, particularly, a magnesium powder or a magnesium metal.

According to an embodiment of the present invention, the Grignard reagent containing a styrene residual group, represented by Formula 7 may be prepared through the reaction of a compound represented by Formula 8 below with magnesium, particularly, a magnesium powder or a magnesium metal.

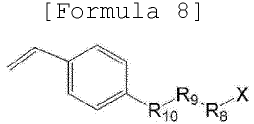

In Formula 8, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ may be each independently an alkyl group of 1 to 10 carbon atoms, and X may be a halogen group.

According to an embodiment of the present invention, in Formula 8, R₈ and R₁₀ may be each independently a single bond or an alkylene group of 1 to 3 carbon atoms, R₉ may be an alkylene group of 1 to 3 carbon atoms or -SiR₁₁R₁₂-, R₁₁ and R₁₂ may be each independently an alkyl group of 1 to 3 carbon atoms, and X may be a halogen group.

According to an embodiment of the present invention, in Formula 8, R₈ and R₁₀ may be each independently a single bond or an alkylene group of 1 carbon atom, R₉ may be an alkylene group of 1 carbon atom or -SiR₁₁R₁₂-, R₁₁ and R₁₂ may be each independently an alkyl group of 1 carbon atom, and X may be a halogen group selected from the group consisting of Cl, Br and I.

According to an embodiment of the present invention, the compound represented by Formula 8 may be one selected from the group consisting of the compounds represented by Formulas 8-1 to 8-4 below.

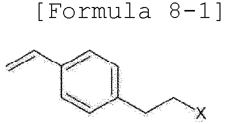

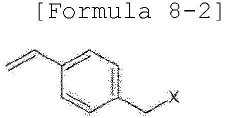

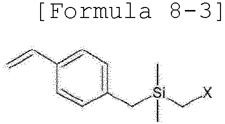

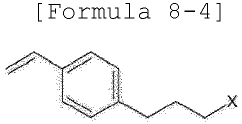

According to an embodiment of the present invention, when preparing the Grignard reagent containing a styrene residual group, represented by Formula 7, the reaction of the compound represented by Formula 8 with the magnesium powder or magnesium metal may be performed with an excessive molar ratio, i.e., a molar ratio greater than 1 mol of the magnesium powder or magnesium metal in contrast to 1 mol of the compound represented by Formula 8 based on a molar ratio may be used, and in this case, 50 mol% or more, 60 mol% or more, 70 mol% or more, 80 mol% or more, 90 mol% or more, 95 mol% or more, or 99 mol% or more of the compound represented by Formula 8 may be converted into a Grignard reagent containing a styrene residual group, represented by Formula 7.

According to an embodiment of the present invention, the reaction of the compound represented by Formula 8 and the magnesium powder or magnesium metal may be performed in a molar ratio of 1: greater than 1 to 10, 1: greater than 1 to 5, 1: greater than 1 to 2, or 1:1.01 to 1.60 based on a molar ratio, and within this range, the conversion ratio into the Grignard reagent containing a styrene residual group, represented by Formula 7 may be high, the remaining magnesium content after the reaction may be minimized, and the removal of remaining magnesium powder or magnesium metal may be easy.

According to an embodiment of the present invention, in preparing an organozinc compound, the zinc compound is required to be a zinc compound that may induce substitution with the same two organic groups at zinc based on the zinc. Accordingly, zinc chloride (ZnCl₂) may be easily considered, but if zinc chloride is used as the zinc compound, there is a problem of remaining impurities including chlorine (for example, alkylzinc chloride), that may act as a catalyst poison. Accordingly, in the present invention, alkylzinc alkoxide is used as the zinc compound.

According to an embodiment of the present invention, the alkyl group of the alkylzinc alkoxide may be an alkyl group of 1 to 10 carbon atoms, an alkyl group of 1 to 5 carbon atoms, an alkyl group of 1 to 3 carbon atoms, or an ethyl group, and the alkoxide group may be an alkoxide group of 1 to 10 carbon atoms, an alkoxide group of 1 to 5 carbon atoms, an alkoxide group of 1 to 3 carbon atoms, or a methoxide group. In a particular embodiment, the zinc compound may be ethylzinc methoxide.

According to an embodiment of the present invention, the alkylzinc alkoxide may be prepared from dialkyl zinc. In a particular embodiment, the alkylzinc alkoxide may be prepared by reacting dialkyl zinc and an alcohol in situ. In this case, the alkyl group of the dialkyl zinc may be the same as the above-described alkyl group of the alkylzinc alkoxide, and the alcohol may be an alcohol obtained by bonding hydrogen instead of the alkoxide in the alkylzinc alkoxide.

According to an embodiment of the present invention, if the alkylzinc alkoxide is used as the zinc compound, halogenated magnesium alkoxide is produced during the reaction of the Grignard reagent and the zinc compound, and since this is an insoluble salt, filtering is easy, and the remaining of impurities may be easily prevented.

According to an embodiment of the present invention, the reaction of the Grignard reagent and the zinc compound may be performed in a molar ratio of 10:1 to 1:10, 5:1 to 1:5, 3:1 to 1:3, 2:1 to 1:2, 1.5:1 to 1:1.5, or 1:1 based on a molar ratio, and within this range, a single compound may be synthesized, by-products such as a dimer may be excluded, impurities containing chlorine that may act as a catalyst poison may be excluded, and the removal of impurities including magnesium that may act as a catalyst poison may be easy.

According to an embodiment of the present invention, all steps and all reactions of the preparation method of the zinc compound may be performed in an organic solvent, and the reaction temperature and the reaction pressure may be controlled according to the purpose of increasing yield and purity.

In the preparation method of the zinc compound according to an embodiment of the present invention, the catalyst poison may be completely removed by replacing the conventional borane-based compound containing a styrene residual group with the Grignard reagent containing a styrene residual group, and by replacing alkyl zinc or zinc chloride with alkylzinc alkoxide.

According to an embodiment of the present invention, the catalyst composition may include an aluminoxane-based compound and trialkylaluminum. In a particular embodiment, the catalyst composition may include an aluminoxane compound represented by Formula 9 below and trialkylaluminum. Like this, if the catalyst composition includes an aluminoxane-based compound and trialkylaluminum, the particle size and dispersibility of a block copolymer may be controlled during preparing a resin composition from the block copolymer prepared thereby, and the size of a domain region and a distance between multiple domain regions may be controlled.

According to an embodiment of the present invention, the aluminoxane compound represented by Formula 9 below may play the roles of a co-catalyst, a scavenger, or both a co-catalyst and a scavenger.

[Formula 9] -[Al(Rₐ)-O]ₘ-

In Formula 9, each Rₐ is independently a halogen radical; a hydrocarbyl radical of 1 to 20 carbon atoms; or a halogen-substituted hydrocarbyl radical of 1 to 20 carbon atoms, and m is an integer of 2 or more.

According to an embodiment of the present invention, the compound represented by Formula 9 is not specifically limited as long as it is an alkyl aluminoxane. Preferred examples may include modified methyl aluminoxane (MMAO), methyl aluminoxane (MAO), ethyl aluminoxane, isobutyl aluminoxane, butyl aluminoxane, etc., and particularly preferable compound may be modified methyl aluminoxane (MMAO).

According to an embodiment of the present invention, the compound represented by Formula 9 is a compound of an oligomer type produced by the reaction of alkylaluminum with water, and if used as a co-catalyst, chain transfer may be reduced. Accordingly, a copolymer having a high molecular weight may be prepared, and the production of homo-polyolefin by side reactions may be prevented. Accordingly, finally, a block copolymer showing excellent physical properties such as high tensile strength may be prepared.

According to an embodiment of the present invention, the trialkylaluminum may play the role of an additive for controlling the structure of the block copolymer by inducing transalkylation with an olefin-based polymer block intermediate during the polymerization of the block copolymer. In a particular embodiment, the trialkylaluminum may be trialkylaluminum including an alkyl group of 1 to 12 carbon atoms, particularly, trialkylaluminum including an alkyl group of 3 to 12 carbon atoms, 6 to 12 carbon atoms, 6 to 10 carbon atoms or 6 to 8 carbon atoms. In a more particular embodiment, the trialkylaluminum may be one or more selected from the group consisting of trimethylaluminum, triethylaluminum, tri-n-propylaluminum, tri-n-butylaluminum, tri-n-pentylaluminum, trihexylaluminum, trioctylaluminum and tridecylaluminum, more particularly, trioctylaluminum.

According to an embodiment of the present invention, the catalyst composition may include the aluminoxane-based compound and the trialkylaluminum in a molar ratio of 1:0.01 to 10.0. In a particular embodiment, the catalyst composition may include the aluminoxane-based compound and the trialkylaluminum in a molar ratio of 1:0.01 or more, 0.02 or more, 0.03 or more, 0.04 or more, 0.05 or more, 0.06 or more, 0.07 or more, 0.08 or more, 0.09 or more, 0.1 or more, 0.2 or more, or 0.3 or more, and 10.0 or less, 9.0 or less, 8.0 or less, 7.0 or less, 6.0 or less, 5.0 or less, 4.0 or less, 3.0 or less, 2.0 or less, 1.0 or less, 0.9 or less, 0.8 or less, 0.7 or less, or 0.6 or less, and within this range, the molecular weight distribution of the block copolymer may be controlled very broadly, while controlling its weight average molecular weight.

According to an embodiment of the present invention, by using the transition metal compound represented by Formula 1, and the aluminoxane-based compound represented by Formula 9 and the trialkylaluminum in combination as the catalyst composition, the block copolymer satisfying the above-described conditions may be prepared.

According to an embodiment of the present invention, the catalyst composition may use the transition metal compound represented by Formula 1, the aluminoxane-based compound represented by Formula 9 and the trialkylaluminum in a supported type by a support. As the support, silica or alumina may be used, without limitation.

According to an embodiment of the present invention, the catalyst composition may further include a compound represented by Formula 10 below.

[Formula 10] [L-H]⁺[Z(A)₄]⁻ or [L]⁺[Z(A)₄]⁻

In Formula 10, Z is an element in group 13, each A is independently aryl of 6 to 20 carbon atoms where one or more hydrogen atoms may be substituted with substituents; or alkyl of 1 to 20 carbon atoms, and the substituent of A is halogen; hydrocarbyl of 1 to 20 carbon atoms; alkoxy of 1 to 20 carbon atoms; or aryloxy of 6 to 20 carbon atoms.

According to an embodiment of the present invention, step (S10) may be performed in a homogenous solution state. In this case, a hydrocarbon solvent may be used as a solvent, or the olefin monomer itself may be used as a medium. The hydrocarbon solvent may include an aliphatic hydrocarbon solvent of 4 to 20 carbon atoms, particularly, isobutane, hexane, cyclohexane, methylcyclohexane, or the like. The solvent may be used alone, or a mixture of two or more thereof may be used.

According to an embodiment of the present invention, the polymerization temperature of step (S10) may change according to the reaction material, reaction conditions, or the like, and may particularly be 70°C to 170°C, particularly, 80°C to 150°C, or 90°C to 120°C. Within the aforementioned range, the solubility of a polymer may increase, and the catalyst may be thermally stabilized.

According to an embodiment of the present invention, the polymerization in step (S10) may be performed by a batch type, a semi-continuous type or a continuous type, or may be performed by two or more steps having different reaction conditions.

According to an embodiment of the present invention, the olefin-based polymer block intermediate prepared in the above-described step (S10) may play the role of a precursor for preparing the block copolymer of the present invention by the polymerization reaction of step (S20), which will be explained later.

According to an embodiment of the present invention, the olefin-based monomer may be ethylene and alpha olefin-based monomer, and the alpha olefin-based monomer is the same as that described on the block copolymer.

According to an embodiment of the present invention, step (S20) is a step for preparing a block copolymer by reacting an aromatic vinyl-based monomer with the olefin-based polymer block intermediate in the presence of a polymerization initiator.

According to an embodiment of the present invention, in step (S20), aromatic vinyl-based monomers may be continuously inserted between the zinc-carbon bonds of (polyolefinyl)₂Zn included in the olefin-based polymer block intermediate formed by step (S10) to form an aromatic vinyl-based polymer block chain, and at the same time, styrene groups derived from a chain extender present at the terminal of the compound formed by step (S10) may participate as a copolymer moiety with an aromatic vinyl-based monomer to be connected with the aromatic vinyl-based polymer block chain. In addition, the block copolymer produced through the process may be easily quenched through the reaction of a terminal group with water, oxygen or an organic acid, and through this, conversion into a polyolefin-polystyrene-based multiblock copolymer which is industrially useful may be achieved.

According to an embodiment of the present invention, the aromatic vinyl-based monomer is the same as that described on the block copolymer.

According to an embodiment of the present invention, the polymerization initiator may be an anionic polymerization initiator, particularly, an alkyllithium compound represented by Formula 11 below.

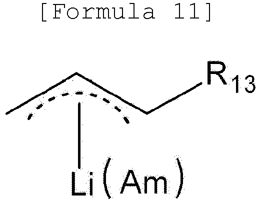

In Formula 11, R₁₃ is hydrogen or a hydrocarbon group of 1 to 20 carbon atoms, Am is an amine-based compound represented by Formula 12 below, 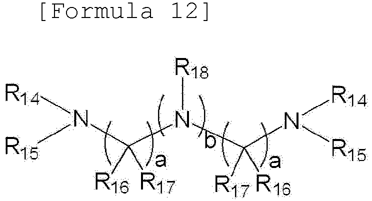 in Formula 12, R₁₄ to R₁₈ are each independently hydrogen or a hydrocarbon group of 1 to 20 carbon atoms, and a and b are each independently an integer of 0 to 3, where a and b are not 0 at the same time.

According to an embodiment of the present invention, R₁₃ may be hydrogen, alkyl of 1 to 20 carbon atoms, cycloalkyl of 3 to 20 carbon atoms, or a substituted or unsubstituted arylalkyl of 7 to 20 carbon atoms; R₁₄ to R₁₈ may be each independently hydrogen, alkyl of 1 to 20 carbon atoms, alkenyl of 1 to 20 carbon atoms, cycloalkyl of 3 to 20 carbon atoms, a substituted or unsubstituted aryl of 6 to 20 carbon atoms, or a substituted or unsubstituted arylalkyl of 7 to 20 carbon atoms; and a and b may be each independently an integer of 0 to 2.

According to an embodiment of the present invention, R₁₃ to R₁₈ may be each independently hydrogen or alkyl of 1 to 20 carbon atoms; a is 1 or 2, and b may be 0 or 1. Particularly, a is an integer of 1 to 3, and b may be an integer of 0 to 3, more particularly, a is 1 or 2, and b may be an integer of 0 to 2, more particularly, a is 1 or 2, and b may be 0 or 1.

According to an embodiment of the present invention, Am in Formula 11 may particularly be represented by Formula 13 or 14 below.

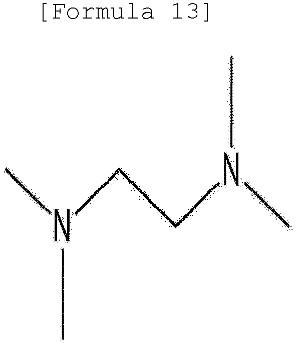

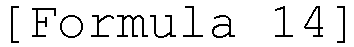

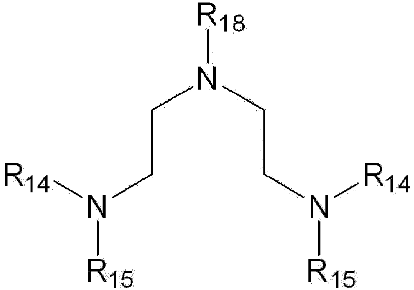

In the formulas, R₁₄, R₁₅ and R₁₈ are each independently hydrogen or alkyl of 1 to 20 carbon atoms.

According to an embodiment of the present invention, Am in Formula 11 may particularly be represented by Formula 13a or Formula 14a below.

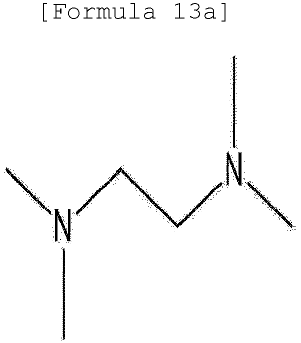

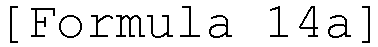

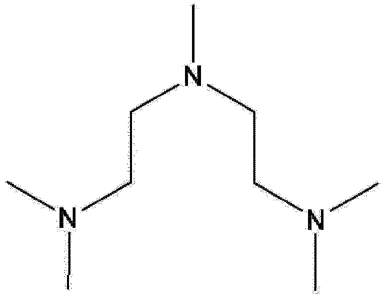

According to an embodiment of the present invention, the polymerization initiator represented by Formula 11 may be prepared by a preparation method below. The preparation method of the polymerization initiator includes a process of injecting and reacting a compound represented by Formula 16 and a compound represented by Formula 12 in the presence of a compound represented by Formula 15.

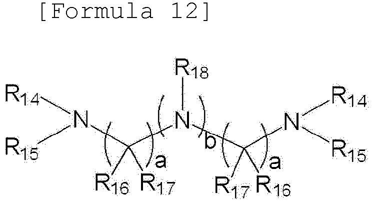

[Formula 15] B-Li

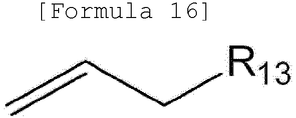

In the formulas, R₁₃ to R₁₈ are each independently hydrogen or a hydrocarbon group of 1 to 20 carbon atoms; a and b are each independently an integer of 0 to 3, where a and b are not 0 at the same time; and B is alkyl of 1 to 20 carbon atoms.

According to an embodiment of the present invention, R₁₃ may be hydrogen or a hydrocarbon group of 1 to 20 carbon atoms; R₁₄ to R₁₈ may be each independently hydrogen, alkyl of 1 to 20 carbon atoms, alkenyl of 1 to 20 carbon atoms, cycloalkyl of 3 to 20 carbon atoms, substituted or unsubstituted aryl of 6 to 20 carbon atoms, or substituted or unsubstituted arylalkyl of 7 to 20 carbon atoms; a and b may be each independently an integer of 0 to 2; and B may be alkyl of 1 to 12 carbon atoms.

According to an embodiment of the present invention, R₁₄ to R₁₈ are each independently hydrogen or alkyl of 1 to 20 carbon atoms; a is an integer of 1 or 2, and b may be an integer of 0 or 1; and B may be alkyl of 1 to 8 carbon atoms. Particularly, a is an integer of 1 to 3, and b may be an integer of 0 to 3, more particularly, a is 1 or 2, and b may be an integer of 0 to 2, more particularly, a is 1 or 2, and b may be 0 or 1.

According to an embodiment of the present invention, the alkyllithium compound represented by Formula 16 may be, for example, n-BuLi, and n-BuLi is a material widely used as an initiator of anionic polymerization, is easy to get, and has excellent unit price efficiency.

According to an embodiment of the present invention, in the preparation method of the polymerization initiator, a process of reacting the compound represented by Formula 15 with the compound represented by Formula 16 may be performed firstly, and then, by reacting with the compound of Formula 12, the compound represented by Formula 11 may be prepared. Particularly, by reacting the compound represented by Formula 15 with the compound represented by Formula 16, allyllithium may be formed as an intermediate, and the allyllithium may react with the compound of Formula 12 to finally form the polymerization initiator of Formula 11.

According to an embodiment of the present invention, the process of injecting and reacting the compound represented by Formula 16 and the compound represented by Formula 12 in the presence of the compound represented by Formula 15, may be performed in conditions without an additional solvent. The conditions without an additional solvent mean the absence of a separate compound that may be a solvent, other than the compound represented by Formula 15 and the compound represented by Formula 12, or the presence of a small amount that does not arise significant reaction with the compound of Formula 15 in the presence of the compound represented by Formula 16. If the reaction is performed in conditions without an additional solvent, the reaction of the compound represented by Formula 15 with the compound represented by Formula 16 may be performed as the main reaction, and the polymerization initiator of Formula 11 may be effectively prepared. If a separate solvent is present, the polymerization initiator of Formula 11, a compound produced by the reaction of the compound represented by Formula 15 and the compound represented by Formula 12, and a decomposed compound of the compound produced by the reaction of the compound represented by Formula 15 and the compound represented by Formula 12, may be present as a mixture, ineffectively.

According to an embodiment of the present invention, the polymerization initiator may be a silyl compound represented by Formula 17 below.

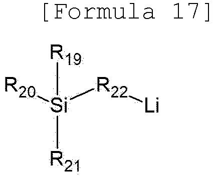

In Formula 17, R₁₉ to R₂₁ may be each independently hydrogen or a hydrocarbon group of 1 to 20 carbon atoms; and R₂₂ may be a divalent alkylene group of 1 to 20 carbon atoms. In a particular embodiment, R₁₉ to R₂₁ may be each independently a hydrocarbon group of 1 to 10 carbon atoms; and R₂₂ may be a divalent alkylene group of 1 to 10 carbon atoms, and in a more particular embodiment, R₁₉ to R₂₁ may be each independently a hydrocarbon group of 1 to 6 carbon atoms; and R₂₂ may be a divalent alkylene group of 1 to 6 carbon atoms. In Formula 17, Li may make an ionic bond with carbon positioned at the terminal of the alkylene group of R₂₂, and accordingly, the silyl compound represented by Formula 17 may play the role of an anionic polymerization initiator.

According to an embodiment of the present invention, the silyl compound represented by Formula 17 may be (trimethylsilyl)methyllithium. In addition, the silyl compound represented by Formula 17 may be used in a type of a complex through mixing with an amine-based compound represented by Formula 12.

According to an embodiment of the present invention, the polymerization initiator is used as an initiator in step (S20), and a polystyrene-based chain may be grown from an organozinc compound, particularly, the polyolefin of (polyolefinyl)₂Zn in which a olefin-based polymer block chain is grown around zinc (Zn), prepared in step (S10).

The present invention provides a resin composition.

According to an embodiment of the present invention, the resin composition may include a polyolefin-based resin and the block copolymer.

According to an embodiment of the present invention, the polyolefin-based resin may form a matrix region in the resin composition, the block copolymer may form a domain region, and a type in which the block copolymer of the domain region is dispersed in the polyolefin-based resin of the matrix region may be shown.

According to an embodiment of the present invention, the resin composition may include 40 wt% to 80 wt% of the polyolefin-based resin and 20 wt% to 60 wt% of the block copolymer. In a particular embodiment, the resin composition may include the polyolefin-based resin in 40 wt% or more, 41 wt% or more, 42 wt% or more, 43 wt% or more, 44 wt% or more, 45 wt% or more, 46 wt% or more, 47 wt% or more, 48 wt% or more, 49 wt% or more, or 50 wt% or more, and 80 wt% or less, 79 wt% or less, 78 wt% or less, 77 wt% or less, 76 wt% or less, 75 wt% or less, 74 wt% or less, 73 wt% or less, 72 wt% or less, 71 wt% or less, or 70 wt% or less, and may include a residual amount of the block copolymer.

According to an embodiment of the present invention, the resin composition may include the polyolefin-based resin and the block copolymer in a weight ratio of 1:0.11 to 1:9, and in a particular embodiment, may include the polyolefin-based resin and the block copolymer in a weight ratio of 1:0.11 to 4, 1:0.11 to 3, 1:0.11 to 2.4, 1:0.11 to 1.5, 1:0.11 to 1, 1:0.17 to 1.5, 1:0.17 to 1, or 1:0.17 to 0.25.

According to an embodiment of the present invention, if the resin composition includes the polyolefin-based resin and the block copolymer in the range, the impact strength of the resin composition may be improved even further, and the deterioration of flowability may be prevented to improve processability.

According to an embodiment of the present invention, the polyolefin-based resin may be polypropylene. The polypropylene may particularly be a polypropylene homopolymer, or a copolymer of propylene and an alpha-olefin monomer, and in this case, the copolymer may be an alternating, random or block copolymer.

According to an embodiment of the present invention, in the polypropylene, the alpha-olefin-based monomer may particularly be an aliphatic olefin of 2 to 12 carbon atoms, or 2 to 8 carbon atoms. More particularly, ethylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene or 3,4-dimethyl-1-hexene may be used, and one among them or a mixture of two or more thereof may be used.

According to an embodiment of the present invention, the polypropylene may be any one selected from the group consisting of a polypropylene homopolymer, a propylene-alpha-olefin copolymer and a propylene-ethylene-alpha-olefin copolymer, or a mixture of two or more thereof, and the copolymer may be a random or block copolymer.

According to an embodiment of the present invention, the polypropylene may have a melt index (MI) measured by ASTM D1238 at 230°C with a load of 2.16 kg of 0.5 g/10 min to 100 g/10 min, 0.5 g/10 min or more, 1.0 g/10 min or more, or 2.0 g/10 min or more, and 100 g/10 min or less, 90 g/10 min or less, or 50 g/10 min or less, and within this range, the processability of the resin composition during injection molding may be improved even further. In addition, the polypropylene may be a copolymer having the melt index, particularly, a propylene-ethylene copolymer or a high crystalline polypropylene (HCPP), and in this case, strength properties may be improved even further.

According to an embodiment of the present invention, the polypropylene may have a DSC melting point of 120°C to 160°C.

According to an embodiment of the present invention, the polypropylene may be prepared to satisfy the physical property conditions using a common polymer preparation reaction, or may be commercially accepted and used. In a particular embodiment, SEETEC^{™} M1600 of LG CHEM, CB5230 of Korea Petrochemical Ind, Co, Ltd. and the like may be used. In addition, the polypropylene copolymer may be a random propylene copolymer, and may be Braskem^{™} PP R7021-50RNA of Braskem America Inc., Formolene^{™} 7320A of Formosa Plastics Corporation, or the like.

According to an embodiment of the present invention, the resin composition may selectively further include an inorganic filler to improve the mechanical properties of the resin composition. The inorganic filler may particularly be a powder-type filler, a flake-type filler, a fiber-type filler or a balloon-type filler, and one or a mixture of two or more thereof may be used. In a particular embodiment, the powder-type filler may include natural silicic acid or silicates such as fine powder talc, kaolinite, calcined clay and sericite; carbonates such as precipitated calcium carbonate, heavy calcium carbonate and magnesium carbonate; hydroxides such as aluminum hydroxide and magnesium hydroxide; oxides such as zinc oxide, magnesium oxide and titanium oxide; synthetic silicic acid or silicates such as hydrated calcium silicate, hydrated aluminum silicate, hydrated silicic acid and anhydrous silicic acid; silicon carbide, or the like. In addition, the flake-type filler may include mica. In addition, the fiber-type filler may include basic magnesium sulfate whiskers, calcium titanate whiskers, aluminum borate whiskers, sepiolite, processed mineral fiber (PMF), or calcium titanate. In addition, the balloon-type filler may include glass balloon. Among them, talc may be used.

According to an embodiment of the present invention, the inorganic filler may be surface-treated to improve the strength properties and the molding processability of the resin composition. Particularly, the inorganic filler may be physically or chemically surface-treated using a surface treating agent such as a silane coupling agent, a higher fatty acid, a fatty acid metal salt, an unsaturated organic acid, an organic titanate, a resin acid and polyethylene glycol.

According to an embodiment of the present invention, the inorganic filler may have an average particle diameter (D₅₀) of 1 µm to 20 pm, particularly, 3 µm to 15 pm, more particularly, 5 µm to 10 pm, and within this range, uniform dispersion may be possible in the resin composition, and mechanical properties may be improved even further. The average particle diameter (D₅₀) of the inorganic filler may be defined as a particle diameter based on 50% of volume particle diameter distribution. In the present invention, the average particle diameter (D₅₀) of the inorganic filler may be measured by, for example, observing electron microscope using scanning electron microscopy (SEM), field emission scanning electron microscopy (FE-SEM), etc., or by a laser diffraction method. In case of measuring by the laser diffraction method, more particularly, the inorganic filler particles are dispersed in a dispersion medium and introduced into a commercially available laser diffraction particle size measurement apparatus (for example, Microtrac MT 3000), and then, an average particle diameter (D₅₀) based on 50% of volume particle diameter distribution in the measurement apparatus may be computed.

According to an embodiment of the present invention, the inorganic filler may be included in 0.1 parts by weight to 40 parts by weight, or 0.1 parts by weight to 20 parts by weight with respect to 100 parts by weight of the total amount of the polyolefin-based resin and the block copolymer, and within the range, mechanical properties may be improved even further, while preventing the deterioration of processability.

According to an embodiment of the present invention, the resin composition may be prepared by adding and mixing a polyol-based resin and selectively an inorganic filler to the block copolymer and then heating. The mixing process may be performed according to a common method. Particularly, the mixing may use a super mixer or a ribbon mixer.

According to an embodiment of the present invention, additives such as an antioxidant, a thermal stabilizer, a ultraviolet stabilizer and an antistatic agent may be further included during mixing according to need, and a small amount of an adhesive resin or an additive having a polar group may be selectively further used in appropriate amount ranges for improving coatability.

According to an embodiment of the present invention, the heat treatment may be performed at a temperature from the melting point of the polyolefin-based resin to 210°C. The heat treatment process may be performed using various mixing processors such as a common twin-screw extruder, a single-screw extruder, a roll-mill, a kneader and a Banbury mixer.

According to an embodiment of the present invention, the resin composition may be useful for blow molding, extrusion molding or injection molding in various fields and uses for packages, constructions and household goods such as materials for automobiles, wirings, toys, fiber and medicine. Particularly, since physical properties such as heat resistance and rigidity are excellent as well as excellent tensile properties and impact strength at room temperature and even at a low temperature, the resin composition may be usefully used for the interior and exterior parts of automobiles.

According to an embodiment of the present invention, the resin composition may have impact strength at -50°C measured by ADTM D256 of 5.0 kgf ·m/m or more. In a particular embodiment, the resin composition may have impact strength at -50°C measured by ADTM D256 of 5.0 kgf-m/m or more, 5.1 kgf-m/m or more, 5.2 kgf ·m/m or more, 5.3 kgf ·m/m or more, 5.4 kgf ·m/m or more, 5.5 kgf ·m/m or more, 5.6 kgf ·m/m or more, 5.7 kgf ·m/m or more, or 5.8 kgf ·m/m or more, and 20.0 kgf ·m/m or less, 15.0 kgf ·m/m or less, 10.0 kgf ·m/m or less, 9.5 kgf ·m/m or less, or 9.1 kgf·m/m or less.

According to an embodiment of the present invention, the resin composition may show a heat seal strength at 90°C of 0.80 N or more, a heat seal strength at 100°C of 4.50 N or more, and a seal initiation temperature of 96.0°C or less, if a cast film having a thickness of 80 um and a width of 25.4 mm is formed on a single layer cast film line having a melting temperature of 230°C and a cool roll temperature of 25°C, the heat seal strengths at 90°C and 100°C are measured under the conditions below by J&B Universal Sealing Machine Type 5000MB, and the seal initiation temperature at a point where the heat seal strength reached 3 N is calculated by a linear interpolation method from the heat seal strengths at 90°C and 100°C.
- Sealing pressure: 0.1 N/mm²
- Sealing time: 0.1 seconds
- Cooling time: 99 seconds
- Peeling speed: 10 mm/sec
- Initiation temperature: 80°C
- End temperature: 150°C
- Temperature increase: 10°C

According to an embodiment of the present invention, the heat seal strength at 90°C of the resin composition may be 0.80 N or more, particularly, 0.81 N or more, 0.82 N or more, 0.83 N or more, 0.84 N or more, or 0.85 N or more, and 1.5 N or less, 1.4 N or less, 1.3 N or less, 1.2 N or less, 1.1 N or less, or 1.08 N or less.

According to an embodiment of the present invention, the heat seal strength at 100°C of the resin composition may be 4.50 N or more, particularly, 4.55 N or more, 4.60 N or more, 4.65 N or more, 4.70 N or more, 4.75 N or more, 4.80 N or more, 4.85 N or more, 4.90 N or more, 4.95 N or more, or 4.96 N or more, and 10.0 N or less, 9.0 N or less, 8.0 N or less, 7.0 N or less, 6.0 N or less, or 5.85 N or less.

According to an embodiment of the present invention, the seal initiation temperature of the resin composition may be 96.0°C or less, particularly, 95.9°C or less, 95.8°C or less, 95.7°C or less, 95.6°C or less, 95.5°C or less, 95.4°C or less, 95.3°C or less, or 95.2°C or less, and 90.0°C or more, 91.0°C or more, 92.0°C or more, 93.0°C or more, or 94.0°C or more.

Hereinafter, the examples of the present invention will be explained in detail so that a person skilled in the art in a technical field to which the present invention belongs can easily perform. However, the present invention can be accomplished in various different forms and is not limited to the examples explained herein.

### Reagents and experimental conditions

All experiments were performed under an inert atmosphere using a standard glove box and Schlenk technique. Toluene, hexane and tetrahydrofuran (THF) were distilled with benzophenone ketyl and used. Methylcyclohexane (anhydrous grade) used for polymerization reaction was purchased from Tokyo Chemical Industry (TCI), purified with a Na/K alloy, and used. HfCl₄ of sublimation grade was purchased from Streme and used as it was. An ethylene-propylene gas mixture was purified with trioctylaluminum (0.6 M in a mineral spirits) in a bomb reactor (2.0 L).

¹H NMR (600 MHz) and ¹³C NMR (150 MHz) spectrums were recorded using an ECZ 600 apparatus (JOEL).

GPC data were analyzed in 1,2,4-trichlorobenzene at 160°C using a PL-GPC 220 system equipped with a refractive index detector and two columns (Plarian Mixed-B 7.5 × 300 mm Varian [Polymer Lab]).

### (1) Preparation of Transition Metal Compound Represented by Formula 1-1

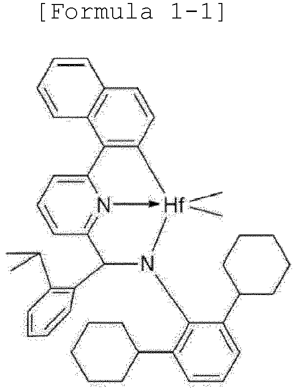

### 1) Preparation of Ligand Compound

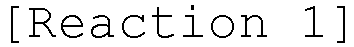

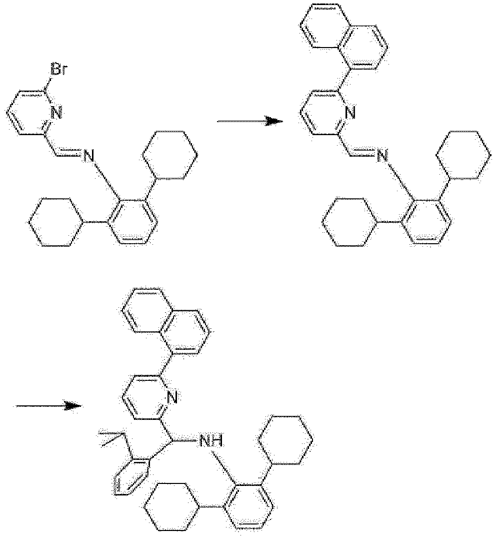

2,6-Dicyclohexylaniline (0.772 g, 3.00 mmol) and 6-bromo-2-pyridinecarboxaldehyde (0.558 g, 3.00 mmol) were dissolved in toluene (5 mL), and molecular sieves were injected thereto. The mixture thus obtained was heated to 70°C while stirring overnight. After filtering, the solvent was removed using a rotary evaporator. A yellow solid was obtained (1.07 g, 84%).

¹H NMR(C₆D₆): δ 8.41 (s, 1H, NCH), 8.09(d, *J* = 7.8 Hz, 1H), 7.53(m, 3H), 6.85(d, *J* = 7.8 Hz, 1H), 6.63(t, *J* = 7.8 Hz, 1H), 2.74(m, 2H), 1.87(d, *J* = 12 Hz, 4H), 1.64(d, *J* = 12.6 Hz, 4H), 1.54(d, *J* = 10.8 Hz, 2H), 1.39(quartet, *J* = 10.2 Hz, 4H), 1.11(m, 6H) ppm.

¹³C NMR(C₆D₆): δ 26.55, 27.33, 34.25, 39.30, 119.42, 124.32, 125.21, 129.83, 136.68, 138.82, 142.54, 148.94, 155.95, 162.06 ppm.

HRMS (EI) : *m*/*z* calcd([M⁺] C₂₄H₂₉BrN₂) 424.1514. Found: 424.1516.

Under nitrogen, a schlenk flask was filled with the a forementioned compound (1.07 g, 2.51 mmol), 1-naphthylboronic acid (0.453 g, 2.64 mmol), Na₂CO₃ (0.700 g, 6.60 mmol), and toluene (5 mL). Deaerated H₂O/EtOH (1 mL, v/v, 1:1) and a solution of (Ph₃P)₄Pd (7.83 mg, 0.00678 mmol) in toluene (1 mL) were injected. By column chromatography on silica gel using hexane and ethyl acetate containing a small amount of triethylamine (*v*/*v,* 90:3:1), a lemon yellow oil was obtained (0.712 g, 60%).

¹H NMR(C₆D₆): δ 8.70 (s, 1H, NCH), 8.41 (d, *J* = 7.8 Hz, 1H), 8.31(d, *J* = 7.8 Hz, 1H), 7.68(d, *J* = 7.2 Hz, 1H), 7.65(d, *J* = 7.8 Hz, 1H), 7.54(d, *J* = 7.2 Hz, 1H), 7.27(m, 4H), 7.20(m, 4H), 2.93(m, 2H), 1.90(d, *J* = 12 Hz, 4H), 1.61(d, *J* = 13.2 Hz, 4H), 1.50(d, *J* = 12.6 Hz, 2H), 1.38(m, 4H), 1.11(m, 6H), ppm.

¹³C NMR(C₆D₆): δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS (EI) : *m*/*z* calcd([M⁺] C₃₄H₃₆N₂) 472.2878. Found: 472.2878.

2-Isopropylphenyllithium (0.114 g, 0.904 mmol) dissolved in diethyl ether (8 mL) was added dropwisely to a schlenk flask containing the aforementioned compound (0.247 g, 0.523 mmol) in diethyl ether (20 mL) . After stirring for 3 hours, an aqueous solution (10 mL) of ammonium chloride (0.30 g) was added, and the product was extracted with diethyl ether (3 × 10 mL). The oil thus produced was dried at 60°C overnight under high vacuum. A yellow solid was obtained (0.257 g, 83%).

¹H NMR(C₆D₆): δ 8.24 (m, 1H), 7.90 (m, 1H), 7.64 (m, 1H), 7.62(d, *J* = 7.8 Hz, 1H), 7.56(d, *J* = 7.2 Hz, 1H), 7.26(m, 3H), 7.22(m, 4H), 7.11(m, 5H), 5.62(d, *J* = 5.4 Hz, 1H, NCH), 4.59(d, *J* = 5.4 Hz, 1H, NH), 3.31(septet, *J* = 7.2 Hz, 1H,CH), 2.74(m, 2H), 1.79(d, *J* = 7.8 Hz, 2H), 1.64 (m, 4H), 1.54(m, 4H), 1.32(m, 4H), 1.08(m, 2H), 1.03(d, *J* = 6.6 Hz, 3H, CH₃), 1.00(m, 1H), 0.980(d, *J* = 6.6 Hz, 3H, CH₃), 0.921(m, 3H) ppm.

¹³C NMR(C₆D₆): δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS(EI): *m*/*z* calcd([M⁺] C₄₃H₄₈N₂) 592.3817. Found: 592.3819.

### 2) Preparation of Transition Metal Compound

A schlenk flask was filled with the ligand compound (0.150 g, 0.253 mmol) in toluene (1.5 g), and n-BuLi (0.17 mL, a 1.6 M solution in hexane, 0.27 mmol) was added thereto dropwisely at room temperature. After stirring for 1 hour, HfCl₄ (0.0814 g, 0.254 mmol) was added thereto as a solid. The reaction mixture was heated at 100°C and stirred for 2 hours. After cooling, MeMgBr (0.29 mL, a 3.1 M solution in diethyl ether, 0.89 mmol) was injected and stirred at room temperature overnight. After removing volatile materials via a vacuum line, the product was extracted with toluene (1.5 g). The extract was obtained through a celite filter. The solvent was removed via a vacuum line, and the residue was triturated in hexane (2 mL) to obtain a yellow solid (0.128 g, 63%).

¹H NMR (C₆D₆): δ 8.58 (d, *J* = 7.8 Hz, 1H), 8.29(d, *J* = 8.4 Hz, 1H), 7.79(d, *J* = 7.8 Hz, 1H), 7.71(d, *J* = 7.2 Hz, 1H), 7.54(d, *J* = 7.8 Hz, 1H), 7.46(m, 1H), 7.30(m, 2H), 7.15(m, 3H), 7.09(m, 3H), 6.88(t, *J* = 7.8 Hz, 1H), 6.62(d, *J* = 8.4 Hz, 1H), 6.48(s, 1H, NCH), 3.39(m, 1H), 2.92(m, 2H), 2.15(d, *J* = 13.8 Hz, 1H), 2.10(d, *J* = 13.8 Hz, 2H), 1.80(m, 2H), 1.65(m, 3H), 1.29(m, 6H), 1.17(d, *J* = 7.2 Hz, 3H, CH₃), 1.07(m, 3H), 0.99(s, 3H, HfCH₃), 0.95(m, 2H), 0.73(d, *J* = 7.2 Hz, 3H, CH₃), 0.70(s, 3H, HfCH₃), 0.23(m, 1H) ppm.

¹³C NMR (C₆D₆): δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd. (C₄₅H₅₂HfN₂): C, 67.61; H, 6.56; N, 3.50%. Found: C, 67.98; H, 6.88; N, 3.19%.

### (2) Preparation of Organozinc Compound

To 78 ml of diethyl ether, 4-vinylbenzyl chloride (15.0 g, 98.3 mmol) and a magnesium metal (2.628 g, 108.1 mmol) was added and stirred at 0°C for 1.0 hour. Then, filtration on celite was performed to remove excessively added magnesium. p-Tosyl-OCH₂CH₂Cl (19.2 g, 81.9 mmol) dissolved in 27 ml of diethyl ether was added dropwisely to the 4-vinylbenzyl-MgCl Grignard reagent produced above. Stirring was performed overnight, and filtration on celite was performed to remove magnesium chloride tosylate (MgCl(OTs)) that is an insoluble salt. The filter cake thus filtered was washed with 70 ml of hexane three times, and the solvent was removed by a rotary evaporator to obtain 14.2 g of a crude product. t-Butylcatechol (43 mg, 3,000 ppm) was added as a radical scavenger, and vacuum distillation was performed at 85°C under full vacuum to obtain a compound represented by Formula 8-4-1 below. As a result of measuring the weight of the compound obtained, yield was 81 wt% (12.0 g), and ¹H NMR and ¹³C NMR spectrums were measured.

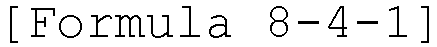

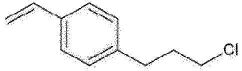

¹H NMR (C₆D₆): δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =CH₂), 5.09 (d, J = 9.6 Hz, 1H, =CH₂), 3.04 (t, J = 6.6 Hz, 2H, CH₂), 2.42 (t, J = 6.6 Hz, 2H, CH₂), 1.64 (quintet, J = 6.6 Hz, 2H, CH₂Cl) ppm.

¹³C NMR(C₆D₆): δ 32.61, 34.12, 44.07, 113.13, 126.74, 128.97, 135.99, 137.11, 140.63 ppm.

Then, the compound represented by Formula 8-4-1 thus prepared (4-(3-chloropropyl)styrene, 10.0 g, 55.3 mmol) was dissolved in a mixture solvent of 20 ml of toluene and 7.98 g (111 mmol) of tetrahydrofuran (THF), and added dropwisely at room temperature to a suspension in which a magnesium powder (2.02 g, 83.0 mmol) was stirred in 40 ml of toluene. After stirring for 5.0 hours and a slight heat was slowly generated, the reaction mixture was filtered on celite to remove an excessive amount of magnesium added. Ethylzinc methoxide (EtZn(OMe), 6.94 g, 55.3 mmol, 1 eq in contrast to Grignard reagent) produced by reacting diethyl zinc (Et₂Zn, 6.83 g, 55.3 mmol) and methanol (1.78 g, 55.3 mmol) in situ in 30 ml of toluene at room temperature for 1.0 hour was added to the filtrate. Then, 60 ml of toluene was added, stirring was performed at room temperature for 1.0 hour, and the solvent was removed using a high vacuum line. Then, 96 g of hexane was added, and magnesium chloride methoxide (MgCl(OMe)) that is an insoluble salt was removed on celite. The filtrate was stored at -30°C to deposit a compound represented by Formula 5-4 as the solid content of a white crystal. As a result of measuring the weight, yield was 56 wt% (7.28 g), and ¹H NMR and ¹³C NMR spectrums were measured.

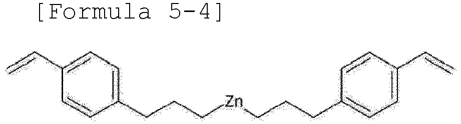

¹H NMR(C₆D₆): δ 7.24 (d, J = 7.8 Hz, 2H), 6.90 (d, J = 7.8 Hz, 2H), 6.64 (dd, J = 17, 11 Hz, 1H, =CH), 5.66 (d, J = 17 Hz, 1H, =CH₂), 5.11 (d, J = 11 Hz, 1H, =CH₂), 2.43 (t, J = 7.2 Hz, 2H, CH₂), 1.80 (quintet, J = 7.2 Hz, 2H, CH₂), -0.19 (t, J = 7.2 Hz, 2H, CH₂Zn) ppm.

¹³C NMR(C₆D₆): δ 12.66, 28.82, 40.09, 113.15, 127.31, 129.23, 136.05, 137.10, 142.91 ppm.

### (3) Preparation of Anionic Polymerization Initiator

(Trimethylsilyl)methyllithium (3,100 pmol, 291.9 mg) and N,N,N',N",N"-pentamethyldiethylenetriamine (3,100 µmol, 537.2 mg) were mixed in methylcyclohexane (20.7 g) and stirred at room temperature for 30 minutes to prepare an anionic polymerization initiator.

### Examples

### Example 1

### <Preparation of Block Copolymer>

A parr reactor (3.785 L) was dried in vacuum at 120°C for 2 hours. A solution of MMAO (600 mg, 1,000 µmol-Al) as a scavenger and trioctylaluminum (183.3 mg, 500 µmol) as an additive in methylcyclohexane (1,200 g) was injected into the reactor. The mixture obtained was stirred at 120°C for 1 hour using a heating jacket, and a solution was removed using a cannula.

The reactor was charged with methylcyclohexane (1,200 g) containing MMAO (1,000 µmol-Al) as a scavenger and trioctylaluminum (500 µmol), and charged with 1-hexene (880 g) as an alpha olefin monomer, and then, the temperature was set to 90°C. A solution of an organozinc compound (4,200 µmol) in methylcyclohexane (5 g) was charged as a chain transfer agent, and a methylcyclohexane solution containing the transition metal compound (10 µmol-Hf) activated with [(C₁₈H₃₇)₂N(H)Me]⁺[B(C₆F₅)₄]⁻ (1.0 eq) in methylcyclohexane was injected thereto. The valve of an ethylene tank was opened, and while maintaining the pressure in the reactor to 25 bar, polymerization was performed for 40 minutes in a range of 90°C to 120°C. After the polymerization, an ethylene gas was exhausted, and the temperature of the reactor was controlled to 90°C again.

At a point where the temperature reached 90°C, the anionic polymerization initiator thus prepared (3,100 µmol) was added. After maintaining the temperature at 90°C for 30 minutes while stirring, styrene (52 g) was injected. The temperature was controlled in a range of 90°C to 100°C using a heating jacket. The viscosity was gradually increased, and within 5 hours, an almost invisible state was attained. An aliquot was taken for the analysis through ¹H NMR spectroscopy. From the ¹H NMR analysis of the aliquot, complete conversion of styrene was confirmed. After the complete conversion of styrene, 2-ethylhexanoic acid and ethanol were continuously injected. The polymer lump thus obtained was dried overnight at 80°C in a vacuum oven to obtain a block copolymer.

### <Preparation of Resin Composition>

To 40 parts by weight of the block copolymer thus prepared, 60 parts by weight of a terpolymer polypropylene (RANPELEN SFC750D, Lotte Chemical Co.) having a melt index (230°C, 2.16 kg) of 7 g/10 min was added, solution blending was performed in xylene using a reactor to prepare a resin composition compound. In this case, the blending was performed under conditions of a temperature of 200°C to 230°C, an impeller rotation speed of 400 rpm, and a blending time of 4 hours. After finishing the blending, a compound was recovered and dried in a vacuum oven of 100°C overnight to obtain a resin composition.

### Examples 2 and 3

The same method as in Example 1 was performed except for changing the types and amounts of the transition metal compound, scavenger, organozinc compound, alpha olefin monomer, styrene, polymerization initiator and additive as shown in Table 1, in Example 1 to obtain block copolymers and resin compositions.

### Comparative Example 1

The same method as in Example 1 was performed except for using G1645 of Kraton Co., which is a commercially available styrene-ethylene-butylene-styrene block copolymer (SEBS) instead of the block copolymer prepared during preparing the resin composition in Example 1, to obtain a resin composition.

### Comparative Examples 2 to 6

The same method as in Example 1 was performed except for changing the types and amounts of the transition metal compound, scavenger, organozinc compound, alpha olefin monomer, styrene, polymerization initiator and additive as shown in Table 1, in Example 1 to obtain block copolymers and resin compositions.

**[Table 1]**

| Division | | Example | | | Comparative Example | | | | |
|---|---|---|---|---|---|---|---|---|---|
| | | 1 | 2 | 3 | 2 | 3 | 4 | 5 | 6 |
| Transi tion metal compou nd | (µmol ) | 10 | 15 | 30 | 10 | 13 | 9.3 | 25 | 9.6 |
| Scaven ger | Type | MMA O | MMAO | MMAO | MMAO | MMAO | MMAO | MMAO | MMAO |
| | (µmol ) | 1,0 00 | 1,00 0 | 1,00 0 | 1,00 0 | 1,00 0 | 1,00 0 | 1,00 0 | 1,00 0 |
| Organo zinc compou nd | (µmol ) | 4,2 00 | 3, 10 0 | 3, 10 0 | 3, 10 0 | 3, 10 0 | 3, 10 0 | 3, 10 0 | 2,40 0 |
| Alpha olefin monome r | Type | 1-hex ene | 1-octe ne | 1-bute ne | 1-hexe ne | 1-hexe ne | 1-octe ne | 1-bute ne | 1-hexe ne |
| | (g) | 880 | 760 | 240 | 832 | 750 | 850 | 400 | 760 |
| Styren e | (g) | 52 | 61 | 63 | 56 | 80 | 57 | 80 | 84 |
| Polyme rizati on initia tor | (µmol ) | 3, 1 00 | 2, 60 0 | 2,30 0 | 3, 10 0 | 2,50 0 | 2, 60 0 | 2,50 0 | 4, 80 0 |
| Additi ve | (g) | 500 | 500 | 500 | 500 | - | - | - | - |

### Experimental Examples

### Experimental Example 1

With respect to the block copolymers prepared in Examples 1 to 3 and Comparative Examples 2 to 6 and the block copolymer of Comparative Example 1, the content, weight average molecular weight and molecular weight distribution of each monomer unit were measured by the methods below and shown in Table 2.
* Contents of ethylene, alpha olefin and styrene (wt%): Measurement was performed through NMR. Particularly, ¹H NMR was measured under conditions of ns=16, d1=3s, solvent=TCE-d2, and 373K using a Bruker 600MHz AVANCE III HD NMR apparatus, a TCE-d2 solvent peak was corrected to 6.0 ppm, CH₃ of 1-propylene was confirmed at 1 ppm, a CH₃-related peak (triplet) of a butyl branch by 1-hexene was confirmed around 0.96 ppm, and the contents were calculated. In addition, the styrene content was calculated by aromatic peaks around 6.5 to 7.5 ppm.
* Weight average molecular weight (Mw, g/mol) and molecular weight distribution (polydispersity index, PDI): By using gel permeation chromatography (GPC), a weight average molecular weight (Mw, g/mol) and a number average molecular weight (Mn, g/mol) were measured, and molecular weight distribution (polydispersity index, PDI) was calculated through dividing the weight average molecular weight by the number average molecular weight.
   - Column: PL Olexis
   - Solvent: Trichlorobenzene (TCB)
   - Flow rate: 1.0 ml/min
   - Specimen concentration: 1.0 mg/ml
   - Injection amount: 200 ul
   - Column temperature: 160°C
   - Detector: Agilent High Temperature RI detector
   - Standard: Polystyrene
   - Molecular weight calculation through universal calibration using a Mark-Houwink equation (K = 40.8 × 10⁻⁵, α = 0.7057)

**[Table 2]**

| Division | Monomer unit content | | | Weight average molecular weight | Molecular weight distribut ion (Mw/Mn) |
|---|---|---|---|---|---|
| | Ethylen e | Alpha olefin | Styrene | | |
| | (wt%) | (wt%) | (wt%) | (g/mol) | |
| Example 1 | 38.1 | 49.2 | 12.7 | 190,822 | 2.47 |
| Example 2 | 31.8 | 53.5 | 14.7 | 125,212 | 2.87 |
| Example 3 | 29.5 | 51.7 | 18.8 | 176,459 | 2.44 |
| Comparative Example 1 | 22.0 | 65.4 | 12.6 | 101,610 | 1.23 |
| Comparative Example 2 | 46.2 | 40.1 | 13.7 | 176, 938 | 2.36 |
| Comparative Example 3 | 26.4 | 51.1 | 22.5 | 116, 961 | 2.12 |
| Comparative Example 4 | 37.2 | 49.1 | 13.7 | 187,404 | 2.08 |
| Comparative Example 5 | 29.4 | 48.6 | 22.0 | 100,535 | 2.46 |
| Comparative Example 6 | 36.2 | 45.0 | 18.8 | 230,825 | 2.54 |

As shown in Table 2, it can be confirmed that the block copolymers prepared in Examples 1 to 3 exhibited the weight average molecular weights and molecular weight distribution defined in the present invention.

On the contrary, it can be confirmed that the block copolymer of Comparative Example 1 showed a very low weight average molecular weight, and the molecular weight distribution was remarkably narrow compared to the molecular weight distribution defined in the present invention.

In addition, in the case of Comparative Example 2 in which 1-hexene that is the same alpha olefin monomer as in Example 1 was added, though the same contents of the catalyst, the scavenger, the polymerization initiator and the additive were injected, it can be confirmed that the molecular weight distribution was narrow in contrast to the molecular weight distribution defined in the present invention according to the change of the contents of the alpha olefin monomer, styrene and organozinc compound.

In addition, in the case of Comparative Example 3 in which 1-hexene that is the same alpha olefin monomer as in Example 1 was added, the contents of the catalyst, organozinc compound, initiator, alpha olefin monomer and styrene except for the scavenger were changed, and particularly, no additives were added, it can be confirmed that the molecular weight distribution was narrow in contrast to the molecular weight distribution defined in the present invention, and the weight average molecular weight was small.

In addition, in the case of Comparative Example 4 in which 1-octene that is the same alpha olefin monomer as in Example 2 was added, though the same contents of the scavenger, organozinc compound and initiator were injected, the contents of the catalyst, alpha olefin monomer and styrene were changed, and particularly, no additives were added, it can be confirmed that though controlling the contents of the ethylene monomer unit, the alpha olefin-based monomer unit and the styrene monomer unit to the similar contents as Example 2, the molecular weight distribution was narrow in contrast to the molecular weight distribution defined in the present invention.

In addition, in the case of Comparative Example 5 in which 1-butene that is the same alpha olefin monomer as in Example 3 was added, the contents of the catalyst, initiator, alpha olefin monomer and styrene were changed though the same contents of the scavenger and organozinc compound were added, and particularly, no additives were added, it can be confirmed that though the contents of the ethylene monomer unit, the alpha olefin-based monomer unit and the styrene monomer unit were controlled to the similar contents in Example 3, the weight average molecular weight was markedly low.

In addition, in the case of Comparative Example 6 in which 1-hexene that is the same alpha olefin monomer as in Example 1 was added, the contents of the catalyst, organozinc compound, initiator, alpha olefin monomer and styrene were changed except for the scavenger, and particularly, no additives were added, it can be confirmed that the weight average molecular weight increased.

### Experimental Example 2

With respect to the resin compositions prepared in Examples 1 to 3 and Comparative Examples 1 to 6, low temperature impact strength, heat seal strength and seal initiation temperature were measured by the methods below and shown in Table 3.
* Low temperature impact strength (kgf·m/m): Each of the resin compositions prepared in the Examples and Comparative Examples was injected into a mold of 210°C under a pressure of 6 bar for 10 seconds, and based on ASTM D256, and molded into a notched type with a size of 63.5 mm × 12.5 mm × 3.2 mm. In this case, the notch length of the manufactured specimen was 5 mm. From the specimen thus manufactured, Charpy impact strength at a low temperature (-50°C) was measured based on ASTM D256, using a Model IT 504 Impact Tester of Tnius olsen Co., by applying two pendulums 2025. The low temperature (-50°C) impact strength was obtained by putting the specimen thus manufactured in a low temperature chamber of which temperature was set to -50°C, exposing the specimen at -50°C for 12 hours or more, taking out the specimen from the low temperature chamber, and measuring impact strength within 3 seconds.
* Low temperature heat seal strength (N) and seal initiation temperature (°C): By using the resin compositions prepared in the Examples and Comparative Examples, a cast film having a thickness of 80 um and a width of 25.4 mm was formed on a single layer cast film line having a melting temperature of 230°C and a cool roll temperature of 25°C. By using the film thus manufactured, the heat seal strengths at 90°C and 100°C were measured under the conditions below by J&B Universal Sealing Machine Type 5000MB, and the seal initiation temperature at a point where the heat seal strength reached 3 N was calculated by a linear interpolation method from the heat seal strengths at 90°C and 100°C.
   - Sealing pressure: 0.1 N/mm²
   - Sealing time: 0.1 seconds
   - Cooling time: 99 seconds
   - Peeling speed: 10 mm/sec
   - Initiation temperature: 80°C
   - End temperature: 150°C
   - Temperature increase: 10°C

**[Table 3]**

| Division | Low temperature impact strength | Low temperature heat seal strength | | Seal initiation temperature |
|---|---|---|---|---|
| | | @ 90°C | @ 100°C | |
| | (kgf·m/m) | (N) | (N) | (°C) |
| Example 1 | 9.1 | 0.85 | 4.96 | 95.2 |
| Example 2 | 5.8 | 1.08 | 5.85 | 94.0 |
| Example 3 | 8.3 | 0.95 | 5.37 | 94.6 |
| Comparative Example 1 | 1.0 | 0.61 | 3.86 | 97.4 |
| Comparative Example 2 | 3.1 | 0.96 | 4.97 | 95.1 |
| Comparative Example 3 | 6.5 | 0.73 | 4.03 | 96.9 |
| Comparative Example 4 | 8.6 | 0.78 | 4.13 | 96.6 |
| Comparative Example 5 | 6.1 | 0.75 | 4.11 | 96.7 |
| Comparative Example 6 | 9.7 | 0.94 | 5.42 | 97.2 |

As shown in Table 3, it can be confirmed that the resin compositions prepared by including the block copolymers prepared in Examples 1 to 3 of the present invention showed markedly improved low temperature impact strength, low temperature heat seal strength and seal initiation temperature compared to the resin composition of Comparative Example 1 prepared by including G1646 of Kraton Co., which is a commercially available styrene-ethylene-butylene-styrene block copolymer (SEBS), as a block copolymer.

On the contrary, it can be confirmed that the resin composition prepared by including the block copolymer prepared in Comparative Example 2 showed very little improvement in low temperature impact strength compared to the resin composition prepared by including the block copolymer of Example 1, which includes the same alpha olefin monomer unit.

In addition, it can be confirmed that the resin composition prepared by including the block copolymer prepared in Comparative Example 3 showed small low temperature heat seal strength and high seal initiation temperature compared to the resin composition prepared by including the block copolymer of Example 1, which includes the same alpha olefin monomer unit. The fact that Comparative Example 3 showed high low temperature impact strength despite its narrow molecular weight distribution compared to Comparative Example 2 is thought to be due to the monomer composition.

In addition, it can be confirmed that the resin composition prepared by including the block copolymer prepared in Comparative Example 4 showed significantly small low temperature heat seal strength and high seal initiation temperature compared to the resin composition prepared by including the block copolymer of Example 2, which includes the same alpha olefin monomer unit.

In addition, it can be confirmed that the resin composition prepared by including the block copolymer prepared in Comparative Example 5 showed significantly small low temperature heat seal strength and high seal initiation temperature compared to the resin composition prepared by including the block copolymer of Example 3, which includes the same alpha olefin monomer unit.

In addition, it can be confirmed that the resin composition prepared by including the block copolymer prepared in Comparative Example 6 showed increased low temperature impact strength and low temperature heat seal strength according to the increase of the weight average molecular weight of the block copolymer compared to the resin composition prepared by including the block copolymer of Example 1, which includes the same alpha olefin monomer unit, but the seal initiation temperature was very high, and there was no improvement in the seal initiation temperature.

From the results, it can be confirmed that the low temperature heat seal strength, seal initiation temperature and low temperature impact strength of the resin composition can be improved according to the weight average molecular weight and the molecular weight distribution of the block copolymer, defined in the present invention, and accordingly, it can be confirmed that the polyolefin-based resin composition of the present invention is particularly suitable as a medical material.

In addition, it can be confirmed that if the block copolymer is prepared according to the method for preparing a block copolymer of the present invention, a block copolymer having broad molecular weight distribution can be prepared according to the purpose of the present invention.

## Claims

1. A block copolymer comprising: an aromatic vinyl-based polymer block and an olefin-based polymer block; and
having a weight average molecular weight (Mw) of 110,000 g/mol to 200,000 g/mol, and a molecular weight distribution (Mw/Mn) of 2.4 to 2.9.

2. The block copolymer according to claim 1, wherein the olefin-based polymer block comprises an ethylene monomer unit and an alpha olefin-based monomer unit.

3. The block copolymer according to claim 1, wherein the olefin-based polymer block comprises an ethylene monomer unit and an alpha olefin-based monomer unit of 3 to 20 carbon atoms.

4. The block copolymer according to claim 2, wherein the alpha olefin-based monomer is one or more selected from the group consisting of 1-propene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene.

5. The block copolymer according to claim 1, wherein the block copolymer comprises: 10 wt% to 20 wt% of the aromatic vinyl-based polymer block; and 80 wt% to 90 wt% of the olefin-based polymer block.

6. The block copolymer according to claim 1, wherein the block copolymer comprises 45 wt% to 55 wt% of an alpha olefin-based monomer unit of 3 to 20 carbon atoms.

7. The block copolymer according to claim 1, wherein the block copolymer comprises 25 wt% to 45 wt% of an ethylene monomer unit.

8. The block copolymer according to claim 1, which does not comprise an unsaturated double bond.

9. A method for preparing a block copolymer, the method comprising:
a step of polymerizing one or more olefin-based monomers using a catalyst composition comprising a transition metal catalyst, an aluminoxane-based compound and a trialkylaluminum in the presence of a chain transfer agent to prepare an olefin-based polymer block intermediate (S10); and
a step of injecting and polymerizing a polymerization initiator and an aromatic vinyl-based monomer in the presence of the olefin-based polymer block intermediate prepared in step (S10) to prepare a block copolymer (S20).

10. The method for preparing a block copolymer according to claim 9, wherein the trialkylaluminum is trioctylaluminum.

11. The method for preparing a block copolymer according to claim 9, wherein the catalyst composition comprises the aluminoxane-based compound and trialkylaluminum in a molar ratio of 1:0.01 to 10.0.

12. A resin composition comprising a polyolefin-based resin and the block copolymer according to any one of claims 1 to 8.

13. The resin composition according to claim 12, wherein the resin composition comprises 40 wt% to 80 wt% of the polyolefin-based resin and 20 wt% to 60 wt% of the block copolymer.

14. The resin composition according to claim 12, which has an impact strength at -50°C measured by ADTM D256 of 5.0 kgf·m/m or more.

15. The resin composition according to claim 12, which has a heat seal strength at 90°C of 0.80 N or more, measured according to the following conditions using a film having a thickness of 80 um and a width of 25.4 mm by J&B Universal Sealing Machine Type 5000MB:
- sealing pressure: 0.1 N/mm²
- sealing time: 0.1 seconds
- cooling time: 99 seconds
- peeling speed: 10 mm/sec
- initiation temperature: 80°C
- end temperature: 150°C
- temperature increase: 10°C.

16. The resin composition according to claim 12, which has a heat seal strength at 100°C of 4.50 N or more, measured according to the following conditions using a film having a thickness of 80 um and a width of 25.4 mm by J&B Universal Sealing Machine Type 5000MB:
- sealing pressure: 0.1 N/mm²
- sealing time: 0.1 seconds
- cooling time: 99 seconds
- peeling speed: 10 mm/sec
- initiation temperature: 80°C
- end temperature: 150°C
- temperature increase: 10°C.

17. The resin composition according to claim 12, which has a seal initiation temperature at a point where a heat seal strength reached 3 N of 96.0°C or less, calculated by a linear interpolation method from heat seal strengths at 90°C and 100°C, measured according to the following conditions using a film having a thickness of 80 um and a width of 25.4 mm by J&B Universal Sealing Machine Type 5000MB:
- sealing pressure: 0.1 N/mm²
- sealing time: 0.1 seconds
- cooling time: 99 seconds
- peeling speed: 10 mm/sec
- initiation temperature: 80°C
- end temperature: 150°C
- temperature increase: 10°C.
